# FASCICULE DE BREVET EUROPEEN

(11) **EP 3 595 805 B1**
(45) Date de publication et mention de la délivrance du brevet: **02.06.2021**
(21) Numéro de dépôt: 18714564.4
(22) Date de dépôt: 13.03.2018
(51) Int. Cl.: B01J 13/00, C08G 59/56, C08G 18/10, C09J 175/04, C09K 3/10

(54) **COMPOSITION THIXOTROPE UTILISABLE COMME AGENT ANTI-COULURE POUR DES MASTICS**
THIXOTROPE ZUSAMMENSETZUNG ALS AUSLAUFSCHUTZMITTEL FÜR KITT
THIXOTROPIC COMPOSITION THAT CAN BE USED AS AN ANTI-RUNNING AGENT FOR MASTICS

(30) Priorité: 14.03.2017 FR 1752054
(43) Date de publication de la demande: 22.01.2020
(73) Titulaire: Bostik SA, 92700 Colombes (FR)
(72) Inventeur: SANZ, Federico, 60750 Choisy au Bac (FR); THILANDER, Lars, 25440 Helsingborg (SE); VERNEAUT, Patrick, 27800 Brionne (FR)
(74) Mandataire: Arkema Patent
(86) Numéro de dépôt international: PCT/FR2018/050584
(87) Numéro de publication internationale: WO 2018/172651

(56) Documents cités:
- EP-A1- 0 985 693
- EP-A1- 1 046 676
- US-B2- 6 548 593

## Description

La présente invention a pour objet une composition thixotrope utilisable comme agent anti-coulure pour des mastics, de préférence pour des mastics mono composants, mis en œuvre dans le domaine de la construction. Elle concerne également une composition adhésive de mastic, comprenant ladite composition thixotrope.

Les mastics sont largement utilisés dans le domaine de la construction, notamment pour assembler - par des joints de dilatation - des substrats, par exemple en béton ou en acier, et permettre grâce à leurs propriétés mécaniques, et en particulier élastiques, d'obtenir un joint stable aux variations dimensionnelles induites par les changements de température.

Généralement conditionnés, en vue d'une utilisation manuelle, dans des cartouches munies à une extrémité d'une canule, les mastics mono composants sont appliqués après avoir placé ladite cartouche dans un pistolet. La manipulation par l'opérateur de la gâchette du pistolet actionne un piston qui extrude le mastic au travers de la canule, et l'introduit dans l'interstice entre les 2 substrats à assembler, en vue de leur jointoiement.

Les compositions de mastics mono composants comprennent un prépolymère réticulable à l'humidité dont la structure chimique est dotée de groupes réactifs, généralement terminaux, isocyanate ou alkoxysilane. La réaction de ces groupes réactifs avec l'eau provenant de l'humidité de l'air ou du substrat (dénommée réaction de réticulation) permet, après l'introduction du mastic dans l'interstice entre les 2 substrats à assembler, la création d'un réseau polymérique tridimensionnel solide, qui confère au joint adhésif ainsi créé les propriétés mécaniques souhaitées. L'obtention effective de ces propriétés mécaniques est atteinte lorsque la totalité de la quantité de mastic introduite est réticulée, ce qui peut nécessiter plusieurs jours.

Dans le cas de mastics bi composants, une première composition, analogue à celle d'un mastic mono composant est combinée avec une deuxième composition qui comprend un agent de réticulation par exemple de type amine. Les 2 compositions sont mélangées au moment de l'application par un dispositif adapté, et également extrudées par l'opérateur au travers d'une canule dans l'interstice entre les 2 substrats à assembler.

Immédiatement après que l'interstice entre les 2 substrats ait été rempli par le mastic extrudé par l'opérateur, la réaction de réticulation commence à la surface du mastic, et après une période de temps variable allant de 3 minutes à 2 heures, il se forme, sur ladite surface, une membrane (ou peau) formée de mastic réticulé. Tant que cette membrane n'est pas formée, le mastic peut présenter un risque de coulure (également dénommé fluage) sous l'effet de la gravité, car l'interstice à jointoyer est très généralement placé dans un plan vertical.

Une telle coulure ou un tel fluage, également désignés par les termes anglais de "sagging" ou "slump", conduisent, après achèvement complet de la réaction de réticulation, à un joint présentant un défaut de planéité et d'homogénéité dimensionnelle nuisant gravement à ses propriétés mécaniques.

Pour prévenir un tel risque, les compositions de mastic, sous forme bi composant ou mono composant comprennent généralement un agent organique thixotrope à base d'un dérivé de type diurée (ou bis-urée).

Le brevet US 6,548,593 décrit un tel agent thixotrope, dans lequel la bis-urée est obtenue par réaction d'un diisocyanate aromatique avec une amine aliphatique. Chacun de ces composés réagit sous la forme d'une solution dans un même support inerte, tel qu'un plastifiant, et la bis-urée, issue de la réaction, est obtenue sous la forme de particules solides dispersées dans ledit support inerte, l'ensemble constituant ainsi une suspension ayant la consistance d'un gel.

Le seul plastifiant mentionné par ce brevet, en tant que support inerte, est le diisodécylphtalate (connu également sous le sigle DIDP). Or il est bien connu que les phtalates peuvent être dangereux pour l'homme, puisque certains d'entre eux ont été classés par l'Agence Européenne des Produits Chimiques comme substances cancérogènes, mutagènes ou reprotoxiques (CMR). Par conséquent, il est très souhaitable, dans un but de santé publique, de limiter l'exposition aux phtalates ou même de les substituer par des substances plus sûres, dans tous les produits industriels dans lesquels ils sont utilisés et auxquels le consommateur et/ou le fabricant sont susceptibles d'être exposés.

Par ailleurs, les plastifiants mis en œuvre dans les mastics peuvent présenter l'inconvénient de migrer (ou diffuser) hors du mastic réticulé, ce qui peut avoir plusieurs conséquences indésirables au niveau du joint adhésif : un aspect inesthétique lié à la présence de tâches à la surface des substrats au contact dudit joint, une perte d'élasticité risquant d'entraîner une rupture dans sa masse (ou rupture cohésive), ou encore une rupture à l'interface entre le joint et le substrat (rupture adhésive).

La présente invention a pour but de fournir une composition thixotrope utilisable comme agent anti-coulure pour des mastics, notamment pour des mastics mono composants, qui soit exempte de phtalate.

Un autre but de la présente invention est de fournir une telle composition thixotrope comprenant comme support inerte, un plastifiant qui, en tant que composant d'un mastic notamment mono composant, ne migre pas hors du mastic réticulé.

Un autre but de la présente invention est de proposer une telle composition d'adhésif ou de mastic, résultant en un joint réticulé qui possède des propriétés mécaniques de même niveau que celles obtenues à partir de DIDP.

Un autre but de la présente invention est de proposer une composition de mastic conduisant à un joint réticulé qui présente des propriétés mécaniques améliorées par rapport à celles obtenues à partir de DIDP, notamment en termes d'élasticité.

Il a à présent été trouvé que ces buts peuvent être atteints, en totalité ou en partie, au moyen de la composition thixotrope et de la composition adhésive de mastic la comprenant, objets de la présente invention, qui sont décrites ci-dessous.

La présente invention concerne donc en premier lieu une composition thixotrope comprenant, sur la base du poids total de ladite composition :
- de 10 à 40 % en poids d'une bis-urée a) obtenue par réaction d'une amine aliphatique primaire a1) avec un diisocyanate a2) de masse molaire inférieure à 500 g/mole, et
- de 60 à 90 % en poids d'un ester b) de formule (I) : 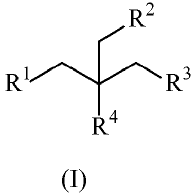 dans laquelle :
   - R¹, R² et R³, identiques ou différents, représentent chacun un radical oxycarbonylalkyle (autrement dit : - O-C(O)-alkyle) ayant de 4 à 20 atomes de carbone ;
   - R⁴ représente un atome d'hydrogène, un radical méthyle ou éthyle ou encore un radical : -CH₂-R⁵ dans lequel R⁵ représente un radical oxycarbonylalkyle ayant de 4 à 20 atomes de carbone ;
   ladite composition se présentant sous la forme d'une suspension (ou dispersion) de particules solides de la bis-urée a) dans une phase continue constituée par l'ester b).

L'incorporation de ladite composition thixotrope dans une composition de mastic, notamment mono composant, à base d'un prépolymère réticulable à l'humidité, permet avantageusement de limiter, voire de supprimer, l'effet indésirable de sagging du mastic non réticulé en surface, sans pour autant limiter l'aptitude dudit mastic à être extrudé de la cartouche d'application. L'incorporation dans ledit mastic de ladite composition thixotrope permet également, après réticulation, l'obtention d'un joint adhésif qui présente les propriétés mécaniques requises, et même améliorées, sans l'inconvénient de diffusion (ou de migration) du plastifiant.

Selon un mode de réalisation, la composition thixotrope selon l'invention est constituée, sur la base du poids total de ladite composition :
- de 10 à 40 % en poids de la bis-urée a), et
- de 60 à 90 % en poids de l'ester b).

La composition thixotrope selon l'invention comprend une bis-urée a) obtenue par réaction d'une amine aliphatique primaire a1) avec un diisocyanate a2) de masse molaire inférieure à 500 g/mole.

L'amine choisie est de préférence une n-alkylamine comprenant de 1 à 22 atomes de carbone, et, de façon encore plus préférée, la n-butylamine.

Le diisocyanate a2) utilisable peut être aromatique ou aliphatique, et a pour formule (II) :

NCO-R⁶-NCO (II)

dans laquelle R⁶ est choisi parmi l'un des radicaux divalents suivants dont les formules ci-dessous font apparaître les 2 valences libres :
- a) le radical divalent dérivé de l'isophorone : 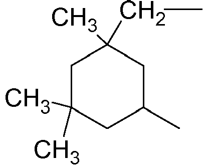
- b) le radical divalent 4,4'-méthylène-bis(cyclohexyle) 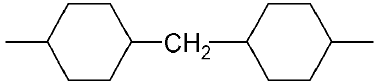
- c) le radical divalent dérivé du 2,4-diisocyanate de toluène (ou 2,4-TDI) ou du 2,6-diisocyanate de toluène (ou 2,6-TDI) de fomules respectives : 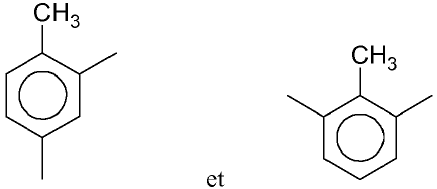
- d) le radical divalent dérivé du 4,2'-diisocyanate de diphénylméthylène (ou 4,2'-MDI) ou du 4,4'-diisocyanate de diphénylméthylène (ou 4,4'-MDI), de formules : 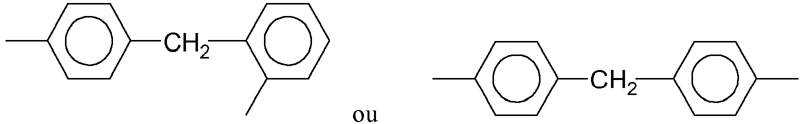
-e) -(CH₂)₆- (ou radical hexaméthylène) ;
f) 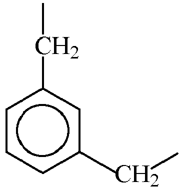 (ou radical m-xylylène)
g) 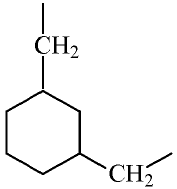 (ou radical hexahydro-m-xylylène)

Le 4,4'-diisocyanate de diphénylméthylène (ou 4,4'-MDI), répondant à l'une des formules d) ci-dessus est particulièrement préféré.

L'ester b) de formule générale (I) est obtenu par réaction d'un acide monocarboxylique avec un polyol, qui est :
- le pentaérythritol, de formule : 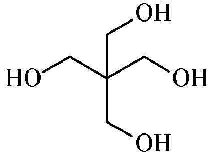 lorsque R⁴ représente un radical : -CH₂-R⁵ ;
- le triméthylolpropane, de formule : 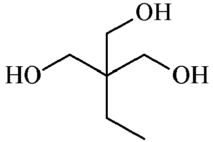 lorsque R⁴ représente le radical éthyle ;
- le triméthyloléthane, de formule : 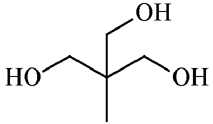 lorsque R⁴ représente le radical méthyle ; ou encore
- le triméthylolméthane, de formule : 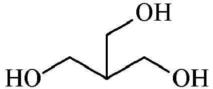
lorsque R⁴ représente un atome d'hydrogène.

L'acide butyrique (également dénommé acide n-butanoïque) ou l'acide valérique (également dénommé acide n-pentanoïque) sont mis en œuvre de façon préférée. Il est fait référence à la demande WO 2012/026861 pour de plus amples détails concernant la préparation de l'ester b).

Selon un mode de réalisation préféré, l'ester b) a pour formule générale (I), dans laquelle R⁴ représente un radical : -CH₂-R⁵.

Selon un mode de réalisation davantage préféré, l'ester b) a pour formule générale (I), dans laquelle :
- R¹, R² et R³ sont identiques et représentent chacun un radical oxycarbonylalkyle ayant 4 ou 5 atomes de carbone ; et
- R⁴ représente un radical : -CH₂-R⁵ dans lequel R⁵ est identique à R¹, R² et R³.

Un ester b) particulièrement préféré est le tétravalérate de pentaérythritol, répondant à la formule (I) dans laquelle R¹, R², R³ et R⁴ représentent chacun le radical :

-O-C(O)-nC₄H₉

et qui est commercialisé sous la marque Pevalen™ par la société Perstorp.

La composition thixotrope selon l'invention peut être préparée de la manière suivante.

La réaction de l'amine aliphatique a1) avec le diisocyanate a2) est très exothermique. Pour éviter que la grande quantité de chaleur formée par la réaction n'entraîne la décomposition de la bis-urée formée, les composés a1) et a2) sont chacun dissous dans l'ester b), préalablement à leur mise en réaction, ledit ester b) servant ainsi à évacuer la chaleur formée par la réaction. Les 2 solutions dans l'ester b) des composés a1) et a2) sont avantageusement introduites chacune dans un réacteur par des injecteurs, sous une pression de 40 à 200 bar, de préférence de 80 à 120 bar, les 2 solutions étant ainsi mises en contact à l'état de liquide pulvérisé. Les quantités de réactifs correspondent de préférence à un rapport (nombre de moles de a1) / (nombre de moles de a2) égal à environ 2. La bis-urée est produite par la réaction sous la forme de particules solides dispersées dans une phase continue de diester b), la viscosité Brookfield de la suspension correspondante, mesurée à la température de 23 °C étant généralement comprise entre 1 et 50 Pa.s, de préférence entre 10 et 25 Pa.s.

La présente invention a également pour objet une composition adhésive de mastic comprenant au moins un prépolymère réticulable à l'humidité choisi parmi un polyuréthane à groupes terminaux -NCO ou un prépolymère à groupes terminaux à groupes terminaux alkoxysilyl, et comme agent anti-coulure de 5 à 30 % en poids, sur la base du poids total de ladite composition, de la composition thixotrope selon l'invention, tele que définie précédemment.

Selon une variante préférée, la composition adhésive de mastic est une composition de mastic mono composant.

Ladite composition adhésive de mastic comprend, selon un mode de réalisation :
- de 10 à 30 % en poids d'au moins un prépolymère réticulable à l'humidité,
- de 20 à 70 % en poids d'au moins une charge,
- de 5 à 25 % en poids de la composition thixotrope, et
- de 0,01 à 1 % en poids d'au moins un catalyseur de réticulation,
les pourcentages en poids étant exprimés par rapport au poids total de la composition adhésive de mastic.

Ladite composition de mastic présente l'avantage de ne pas présenter de risque de coulure (ou de fluage) sous l'effet de la gravité, lorsqu'elle est utilisée pour jointoyer un interstice entre les 2 substrats à assembler qui se situe dans un plan vertical, sans que le joint adhésif ainsi formé ne soit sujet à l'inconvénient de migration ou de diffusion. Ledit joint adhésif possède également les propriétés mécaniques requises, et même une élasticité améliorée.

Selon un mode de réalisation préféré, la composition adhésive de mastic peut comprendre, par exemple, par rapport au poids total de la composition adhésive de mastic :
- de 15 à 25 % en poids d'au moins un prépolymère réticulable à l'humidité,
- de 40 à 70 % en poids de charge,
- de 10 à 20 % en poids de la composition thixotrope, et
- de 0,01 à 1 % en poids de catalyseur de réticulation.

### Prépolymère réticulable à l'humidité:

Le prépolymère réticulable à l'humidité est choisi parmi :
(i) un polyuréthane à groupes terminaux -NCO, ou
(ii) un prépolymère à groupes terminaux alkoxysilyl.

Les polyuréthanes à groupes terminaux -NCO sont préparés, de façon bien connue, en faisant réagir :
- un composé diisocyanate choisi par exemple parmi le diisocyanate de diphényle méthane (MDI), le toluène diisocyanate (TDI), l'isophorone diisocyanate (IPDI), le xylylène diisocyanate (XDI), l'hexaméthylène diisocyanate (HDI), avec
- un polyol ou composition de polyols possédant une masse molaire moyenne en nombre allant de 1000 à 18000 g/mol, de préférence un ou plusieurs polyéthers, et plus préférentiellement d'au moins un polyéther triol.

Les prépolymères polyuréthanes à groupes terminaux -NCO réagissent durant la réaction de réticulation avec l'humidité en formant des liaisons de type urée qui assurent la création d'un réseau polymérique tridimensionnel solide constitutif du joint adhésif.

Les prépolymères à groupes terminaux alkoxysilyl comprennent au moins deux groupements terminaux alkoxysilyl de formule (III) :

-Si(R⁷)ₚ(OR⁸)₃₋ₚ (III)

dans laquelle :
- R⁷ et R⁸, identiques ou différents, représentent chacun un radical alkyl linéaire ou ramifié comprenant de 1 à 4 atomes de carbone, avec la possibilité, quand il y a plusieurs radicaux R⁷ (ou R⁸), que ces derniers soient identiques ou différents ;
- p est un nombre entier égal à 0, 1 ou 2.

On peut citer comme exemple de tels groupes alkoxysilyl les groupes :
-Si(CH₃)(OCH₃) ; -Si(OCH₃)₃ ; -Si(CH₃)(OEt)₂ ; -Si(OEt)₃.

Les groupes terminaux alkoxysilyl sont reliés, directement ou indirectement, à une chaîne principale de type polyéther, polyester ou polyuréthane.

Les prépolymères à groupes terminaux alkoxysilyl réagissent durant la réaction de réticulation avec l'humidité en formant des liaisons de type siloxane qui assurent la création d'un réseau polymérique tridimensionnel solide constitutif du joint adhésif.

Ces prépolymères sont également disponibles au plan commercial, par exemple auprès des sociétés Kaneka, Wacker ou encore Momentive.

Selon une variante préférée, le prépolymère réticulable à l'humidité est un polyuréthane à groupes terminaux -NCO.

### Charge :

La (ou les) charge(s) utilisable(s) dans la composition adhésive de mastic selon l'invention est/sont choisie(s) parmi les charges minérales et les mélanges de charges organiques et de charges minérales.

A titre d'exemple de charge(s) minérale(s) utilisable(s), on utilise n'importe quelle(s) charge(s) minérale(s) habituellement utilisée(s) dans le domaine des compositions de mastic, défini dans la revendication 10. Ces charges se présentent sous la forme de particules de géométrie diverse. Elles peuvent être par exemples sphériques, fibreuses, ou présenter une forme irrégulière.

On utilise des charges minérales choisies parmi de l'argile, du quartz, des charges carbonatées.

Plus préférentiellement, on utilise des charges carbonatées, telles que les carbonates de métaux alcalin ou alcalino-terreux, et plus préférentiellement le carbonate de calcium ou la craie.

Ces charges peuvent être non traitée ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

La quantité de charge minérale pouvant être utilisée peut notamment varier de 20 à 65% en poids, de préférence de 20 à 50% en poids, et plus préférentiellement de 25 à 40% en poids, sur la base du poids de la composition adhésive de mastic selon l'invention.

A titre d'exemple de charge(s) organique(s) utilisable(s), on peut utiliser n'importe quelle(s) charge(s) organique(s) et notamment polymérique(s) habituellement utilisée(s) dans le domaine des compositions de mastic

On peut utiliser par exemple du polychlorure de vinyle (PVC), des polyoléfines, du caoutchouc, de l'éthylène vinyl acétate (EVA), des fibres aramides telles que le Kevlar®.

On peut utiliser également des microsphères creuses en polymère thermoplastique expansibles ou non expansibles. On peut notamment citer des microsphères creuses en chlorure de vinylidène/acrylonitrile.

De préférence, on utilise du PVC.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition adhésive de mastic selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

### Catalyseur de réticulation :

A titre de catalyseur(s) de réticulation utilisable(s) dans la composition adhésive de mastic selon l'invention, on peut utiliser n'importe quel catalyseur(s) connu(s) par l'homme du métier pour catalyser la réticulation du polyuréthane à terminaisons NCO ou de polymère à terminaisons alkoxysilane en présence d'eau (ou d'humidité). L'eau ou l'humidité peut être apportée par la surface du support ou le milieu environnant, de manière naturelle (humidité atmosphérique) ou contrôlée (par exemple, dans une chambre thermostatée à une humidité relative entre 40 et 70% à 23°C, ou un four allant jusqu'à 150°C) au contact de la composition selon l'invention. Cette réticulation se traduit par la création, entre les chaînes polymériques du polyuréthane, de liaisons de type urée qui conduisent à la formation d'un réseau polymérique tridimensionnel.

On peut utiliser par exemple un ou plusieurs catalyseurs de réticulation choisis parmi le dilaurate de dioctyl d'étain (DOTL), les catalyseurs à base de bismuth, ou encore les catalyseurs aminés tertiaires tels que :
- le 1,8-diazabicyclo[5.4.0]undec-7-ène (DBU) : 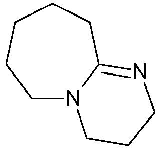
- le 1,5-diazabicyclo[4.3.0]non-5-ène (DBN) : 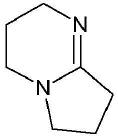
- l'éther diéthylique-2,2'-morpholine (DMDEE) : 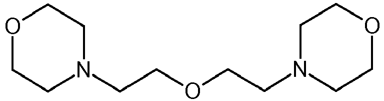
- le 1,4-diazabicyclo[2.2.2]octane (DABCO) :

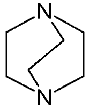

Ces catalyseurs de réticulation présentent l'avantage de ne pas être cancérogènes, mutagènes et reprotoxiques (CMR).

De préférence, la quantité de catalyseur de réticulation utilisable va de 0,05 à 0,5% en poids par rapport au poids de la composition adhésive de mastic selon l'invention.

### Agent plastifiant :

Selon un mode de réalisation préféré de l'utilisation, la composition adhésive de mastic, peut comprendre au moins un agent plastifiant à raison de 5 à 35% en poids, de préférence de 15 à 30% en poids, sur la base du poids de la composition adhésive de mastic selon l'invention. Le plastifiant permet d'augmenter la plasticité de la composition et de diminuer sa viscosité, en permettant notamment, au moment de l'application du mastic conditionné dans une cartouche, son écoulement aisé par extrusion au niveau de la canule. Le plastifiant permet également, lors de l'application, d'améliorer la capacité du mastic à s'étaler ou à mouiller la surface des substrats à jointoyer.

A titre d'exemple d'agent plastifiant utilisable, on peut utiliser n'importe quel agent plastifiant habituellement utilisé dans le domaine des compositions adhésives, de mastic et/ou de revêtement de surface.

De préférence, on utilise :
- un ester d'acide alkylsulphonique et de phénol, tel que commercialisé sous le nom Mesamoll® par la société Lanxess
- le diisononyl-1,2-cyclohexanedicarboxylate, tel que commercialisé sous le nom Hexamoll Dinch® par la société BASF.

Selon l'invention l'agent plastifiant est l'ester b) de formule (I) défini précédemment, et de manière encore plus préférée le tétravalérate de pentaérythritol commercialisé sous la marque Pevalen™ par la société Perstorp.

La composition adhésive de mastic selon l'invention peut comprendre au moins un adjuvant choisi parmi les promoteurs d'adhérence tels que les époxysilanes, les stabilisants UV (ou anti-oxydants), les pigments, les colorants, et leur mélange. Lorsque ces adjuvants sont présents dans la composition, la somme totale de leur teneur est de préférence inférieure ou égale à 15% en poids par rapport au poids total de la composition adhésive de mastic selon l'invention.

La composition adhésive de mastic selon l'invention peut être préparée selon un procédé qui comprend une étape dans laquelle les ingrédients sont mélangés à une température inférieure ou égale à 50°C, de préférence allant de 5 à 45°C, et mieux encore allant de 20 à 30°C, dans des conditions anhydres. On peut utiliser à cet effet un mélangeur disperseur pour produits de haute viscosité, comme par exemple ceux commercialisés par la société Wilhem Niemann.

La composition adhésive de mastic selon l'invention est de préférence stockée dans un environnement anhydre, par exemple dans un conditionnement hermétique où la composition adhésive de mastic se trouve à l'abri de l'humidité et de préférence à l'abri de la lumière.

La présente invention concerne également un article ou packaging, prêt à l'emploi, comprenant la composition adhésive de mastic selon l'invention dans un conditionnement hermétique à l'abri de l'air, en particulier à l'abri de l'humidité ambiante. De préférence, le conditionnement hermétique permet également de protéger la composition de la lumière. Par exemple, le conditionnement hermétique peut être un sac d'aluminium ou une cartouche d'aluminium munie d'un opercule.

Les exemples suivants sont donnés à titre purement illustratif de l'invention et ne sauraient être interprétés pour en limiter la portée.

**Exemple A (référence)** : composition thixotrope constituée d'une suspension de 23,3 % poids/poids de bis-urée dans le DIDP

On prépare tout d'abord :
- une solution A de n-Butylamine dans le DIDP, constituée de 17,17 % poids/poids de n-Butylamine et de 82,83 % poids/poids de DIDP, puis
- une solution B de 4,4'-MDI dans le DIDP, constituée de 29,46 % poids/poids de 4,4'-MDI dans 70,34 % poids/poids de DIDP.

Les 2 solutions A et B sont chauffées à 100°C, puis introduites, chacune sous une pression de 100 bar, dans un réacteur, dans lequel elles sont pulvérisées en continu l'une sur l'autre dans un ratio A/B = 50,1 / 49,9 en poids, correspondant à un rapport molaire n-Butylamine/ MDI égal à 2. La réaction est immédiate et la température du réacteur atteint 140°C en fin de fabrication.

En sortie de réacteur, on obtient une dispersion stable de 23,3 % poids/poids dans le DIDP d'une bis-urée, de formule :

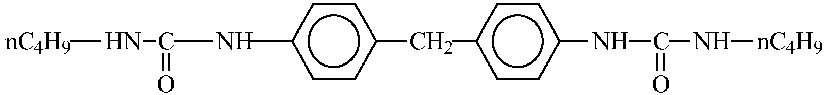

La viscosité Brookfield de la suspension mesurée à 23°C est de 15 Pa.s.

**Exemple B (référence)** : composition adhésive de mastic à base de prépolymère polyuréthane à groupes terminaux -NCO comprenant la composition thixotrope de l'exemple A

On prépare, par simple mélange des ingrédients, la composition de mastic suivante dans laquelle les pourcentages sont des pourcentages poids/poids :
- 17 % de polyuréthane à groupements terminaux -NCO obtenu par réaction d'un mélange de 80% en poids de tolylène-2,4-diisocyanate et 20% en poids de tolylène-2,6-diioscyanate avec un mélange d'un polyéther diol de masse molaire 2000 g/mole et de polyéther triol de masse molaire 4200 g/mole.
- 25 % de charge carbonatée,
- 20 % en poids de PVC,
- 15 % en poids de la composition thixotrope de l'exemple A
- 10 % en poids de DIDP en tant que plastifiant
- 8 % en poids de xylène
- 5 % en poids d'autres additifs incluant le catalyseur de réticulation.

Le polyuréthane a été introduit dans la composition sous la forme d'une solution dans le xylène.

La composition de mastic obtenue est conditionnée dans une cartouche en aluminium, munie d'une canule, en vue de son application au moyen d'un pistolet pour les tests décrits ci-après.

### B.1. Test de la migration du plastifiant :

Ce test est un bon indicateur de la migration du plastifiant hors du mastic réticulé.

On dépose, au moyen de la cartouche contenant la composition de l'exemple B, une masse de 1 g de mastic, sous la forme approximative d'une sphère, au centre d'une 1^{ère} plaque de verre carrée de 5 cm de côté, qui a été préalablement placée horizontalement.

On applique ensuite fortement, sur ladite masse de mastic et au moyen d'une pression manuelle, une 2^{ème} plaque de verre identique à la 1^{ère}, de manière à superposer les 2 plaques et à étaler ainsi le mastic sous la forme approximative d'un disque d'environ 4,5 cm de diamètre.

On observe alors, à travers la plaque de verre supérieure, l'apparition d'un liquide transparent exudé par le disque comprimé de mastic, sous la forme d'un anneau entourant ledit disque, de rayon annulaire compris entre 1 et 2 mm.

### B.2. Test de l'écoulement du mastic non réticulé après extrusion :

Ce test a pour but d'apprécier l'aptitude à l'extrusion, au travers de la canule, du mastic conditionné en cartouche, sous l'effet de la pression exercée par le piston qui est solidaire de la gâchette du pistolet actionnée par l'opérateur.

On extrude dans ce but le mastic sous pression d'air au travers d'une buse calibrée et l'on mesure la masse débitée durant une minute.

Le mastic à tester est placé dans un godet de forme cylindrique (diamètre de 24 mm) terminé par une buse d'extrusion de diamètre 4 mm et de longueur 22,5 mm, et l'on exerce, au moyen d'un appareillage adapté, une pression de 3 bars sur le mastic, en opérant dans une enceinte climatisée à température ambiante (23°C).

Le débit mesuré est indiqué en g/minute dans le Tableau ci-dessous et correspond à un comportement du mastic parfaitement conforme.

### B.3. Test des propriétés de résistance à la traction d'un joint adhésif constitué par le mastic réticulé et unissant 2 substrats

Ce test est réalisé pour un joint adhésif unissant 2 substrats en béton ainsi que pour un joint adhésif unissant 2 substrats en aluminium.

Les 2 substrats de béton destinés à être jointoyés sont 2 substrats de forme parallélépipédique identiques, ayant une longueur de 75 mm, une largeur de 12 mm et une hauteur de 6 mm, la face rectangulaire de chaque substrat destinée à être en contact avec le joint ayant 75 mm de long et 12 mm de hauteur.

Les 2 substrats en aluminium destinés à être jointoyés sont 2 substrats de forme parallélépipédique identiques, ayant une longueur de 75 mm, une largeur de 25 mm et une hauteur de 12 mm, les 2 faces rectangulaires destinées à être en contact avec le joint ayant 75 mm de long et 12 mm de hauteur.

### B.3.1. Préparation des spécimens de joints à tester :

Les joints de béton (ou d'aluminium) à tester sont préparés en utilisant le mastic de l'exemple B, de telle façon que le joint de mastic réticulé qui lie les 2 substrats est centré sur les faces rectangulaires correspondantes, et a une forme de parallélépipède de longueur 50 mm, de largeur 12 mm et de hauteur 12 mm.

Les détails concernant la forme des spécimens de joints adhésifs et leur préparation sont donnés dans la Norme Européenne EN 8339 (cf § 6 et 7). En particulier, le mastic de l'exemple 2 est réticulé par un séjour de 28 jours dans une étuve à 23°C et 50 % d'humidité relative (selon la méthode A indiquée dans la norme), suivi d'un cycle alternant séjours dans une étuve à 70°C et séjours dans l'eau à 23°C (selon la méthode B indiquée dans la norme).

### B.3.2. Essais de traction des joints:

Les spécimens de joints préparés selon B.3.1. sont étirés dans une machine de traction, dont la mâchoire mobile se déplace à une vitesse constante égale à 5,5 mm/minute. On enregistre la contrainte appliquée et l'allongement de l'éprouvette (exprimé en %) durant son étirement.

Le module 100%, correspondant à la contrainte (en MPa) enregistrée pour un allongement de 100% du joint, ainsi que l'allongement (en %) mesurés à la rupture du joint sont indiqués dans le tableau ci-après, pour chaque type de substrat : béton ou aluminium.

### B.4. Test de fluage :

Le degré de fluage (ou sagging ou slump) d'un mastic mis en œuvre dans un joint vertical est mesuré selon la norme ASTM D 2202.

On observe une absence de fluage du mastic, soit une distance mesurée sur l'échelle graduée du dispositif inférieure à 2,5 mm.

**Exemple 1** (selon l'invention) : composition thixotrope constituée d'une suspension de 23,3 % poids/poids de bis-urée dans le tétravalérate de pentaérythritol

On répète l'exemple A en remplaçant le DIDP par le tétravalérate de pentaérythritol.

On obtient une dispersion stable de 23,3 % poids/poids de la même bis-urée, dont la viscosité Brookfield mesurée à 23°C est de 16,7 Pa.s.

**Exemple 2** (selon l'invention) : composition adhésive de mastic à base de prépolymère polyuréthane à groupes terminaux -NCO comprenant la composition thixotrope de l'exemple 1

On répète l'exemple B en remplaçant lors de la préparation du mastic :
- la composition thixotrope de l'exemple A par celle de l'exemple 1, et
- les 10 % de DIDP par 10 % de tétravalérate de pentaérythritol.

Les résultats des tests sont indiqués dans le tableau.

| | Exemple B | Exemple 2 |
|---|---|---|
| Migration du plastifiant Rayon annulaire (en mm) | entre 1 et 2 | < 0,5 |
| Ecoulement après extrusion (en g/minute) | 69 | 69 |
| Module 100% (en MPa) | 0,44 | 0,48 |
| substrat béton | | |
| Allongement à la rupture (en %) | 480 | 563 |
| substrat béton | | |
| Module 100% (en MPa) | 0,41 | 0,46 |
| substrat aluminium | | |
| Allongement à la rupture (en %) | 213 | 387 |
| substrat aluminium | | |
| Distance de fluage (en mm) | < 2,5 | < 2,5 |
| selon ASTM D 2202 | | |

Ces résultats font apparaître pour le mastic de l'exemple 2 un comportement à l'extrusion lors de l'application en cartouche qui est identique à celui de l'exemple B.

Le module à 100% (qui indique la cohésion du joint adhésif) et l'allongement à la rupture (qui correspond à l'élasticité du joint adhésif) sont chacun améliorés pour l'exemple 2 selon l'invention par rapport à l'exemple B de référence, aussi bien pour des substrats en béton que pour des substrats en aluminium.

## Revendications

1. Composition thixotrope comprenant, sur la base du poids total de ladite composition:
- de 10 à 40 % en poids d'une bis-urée a) obtenue par réaction d'une amine aliphatique primaire a1) avec un diisocyanate a2) de masse molaire inférieure à 500 g/mole, et
- de 60 à 90 % en poids d'un ester b) de formule (I) : 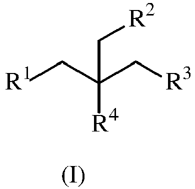 dans laquelle :
- R¹, R² et R³, identiques ou différents, représentent chacun un radical oxycarbonylalkyle ayant de 4 à 20 atomes de carbone ;
- R⁴ représente un atome d'hydrogène, un radical méthyle ou éthyle ou encore un radical : -CH₂-R⁵ dans lequel R⁵ représente un radical oxycarbonylalkyle ayant de 4 à 20 atomes de carbone ;
ladite composition se présentant sous la forme d'une suspension de particules solides de la bis-urée a) dans une phase continue constituée par l'ester b).

2. Composition thixotrope selon la revendication 1, **caractérisée en ce que** l'amine a1) est une n-alkylamine comprenant de 1 à 22 atomes de carbone.

3. Composition thixotrope selon l'une des revendications 1 ou 2, **caractérisée en ce que** l'aminé a1) est la n-butylamine.

4. Composition thixotrope selon l'une des revendications 1 à 3, **caractérisée en ce que** le diisocyanate a2) a pour formule (II) :
NCO-R⁶-NCO (II)
dans laquelle R⁶ est choisi parmi l'un des radicaux divalents suivants dont les formules font apparaître les 2 valences libres :
- a) le radical divalent dérivé de l'isophorone : 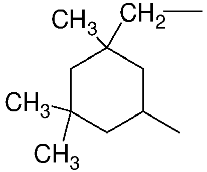
- b) le radical divalent 4,4'-méthylène-bis(cyclohexyle) 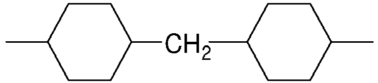
- c) le radical divalent dérivé du 2,4-diisocyanate de toluène (ou 2,4-TDI) ou du 2,6-diisocyanate de toluène (ou 2,6-TDI) de fomules respectives : 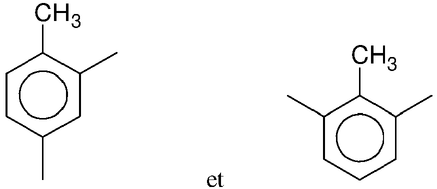
- d) le radical divalent dérivé du 4,2'-diisocyanate de diphénylméthylène (ou 4,2'-MDI) ou du 4,4'-diisocyanate de diphénylméthylène (ou 4,4'-MDI), de formules : 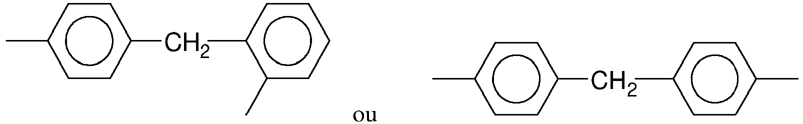
- e) -(CH₂)₆- (ou radical hexaméthylène) ;
f) 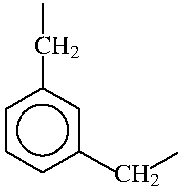 (ou radical m-xylylène)
g) 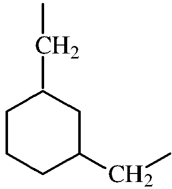 (ou radical hexahydro-m-xylylène)

5. Composition thixotrope selon l'une des revendications 1 à 4, **caractérisée en ce que** le diisocyanate a2) est le 4,4'-diisocyanate de diphénylméthylène.

6. Composition thixotrope selon l'une des revendications 1 à 5, **caractérisée en ce que** l'ester b) a pour formule générale (I), dans laquelle R⁴ représente un radical : -CH₂-R⁵.

7. Composition thixotrope selon l'une des revendications 1 à 6, **caractérisée en ce que** l'ester b) a pour formule générale (I), dans laquelle :
- R¹, R² et R³ sont identiques et représentent chacun un radical oxycarbonylalkyle ayant 4 ou 5 atomes de carbone ; et
- R⁴ représente un radical : -CH₂-R⁵ dans lequel R⁵ est identique à R¹, R² et R³.

8. Composition thixotrope selon l'une des revendications 1 à 7, **caractérisée en ce que** l'ester b) est le tétravalérate de pentaérythritol qui répond à la formule (I) dans laquelle R¹, R², R³ et R⁴ représentent chacun le radical : -O-C(O)-nC₄H₉.

9. Composition adhésive de mastic comprenant au moins un prépolymère réticulable à l'humidité choisi parmi un polyuréthane à groupes terminaux -NCO ou un prépolymère à groupes terminaux alkoxysilyl, et comme agent anti-coulure de 5 à 30 % en poids, sur la base du poids total de ladite composition, de la composition thixotrope telle que définie dans l'une des revendications 1 à 8.

10. Composition adhésive de mastic selon la revendication 9, **caractérisée en ce qu'**elle comprend :
- de 10 à 30 % en poids d'au moins un prépolymère réticulable à l'humidité,
- de 20 à 70 % en poids d'au moins une charge choisie parmi :
- les charges minérales, elles-même choisies parmi l'argile, le quartz, les charges carbonatées, et
- les mélanges de charges organiques et desdites charges minérales ;
- de 5 à 25 % en poids de la composition thixotrope, et
- de 0,01 à 1 % en poids d'au moins un catalyseur de réticulation, les pourcentages en poids étant exprimés par rapport au poids total de ladite composition adhésive.

11. Composition adhésive de mastic selon l'une des revendications 9 ou 10, **caractérisée en ce que** le prépolymère réticulable à l'humidité est un polyuréthane à groupes terminaux -NCO.

12. Composition adhésive de mastic selon l'une des revendications 9 à 11, **caractérisée en ce qu'**elle comprend de 5 à 35% en poids, sur la base du poids de ladite composition, d'un agent plastifiant constitué par l'ester b) de formule (I) telle que définie dans l'une des revendications 1 et 6 à 8.

13. Article prêt à l'emploi, comprenant la composition adhésive de mastic telle que définie dans l'une des revendications 9 à 12, dans un conditionnement hermétique à l'abri de l'air.

## Patentansprüche

1. Thixotrope Zusammensetzung, die auf Basis des Gesamtgewichts der Zusammensetzung Folgendes umfasst:
- von 10 bis 40 Gewichts-% von einem bis-Harnstoff, der a) aus einer Reaktion von einem primären aliphatischen Amin a1) mit einem Diisocyanat a2) mit einer molaren Masse von unter 500 g/mol gewonnen wird, und
- von 60 bis 90 Gewichts-% von einem Ester b) mit der Formel (I): 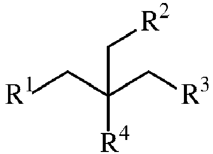 in der:
- R¹, R² und R³, identisch oder verschieden, jeweils einen Oxycarbonylalkylrest mit 4 bis 20 Kohlenstoffatomen darstellen;
- R⁴ ein Wasserstoffatom, einen Methyl- oder Ethylrest oder auch einen Rest -CH₂-R⁵ darstellt, in dem R⁵ einen Oxycarbonylalkylrest mit 4 bis 20 Kohlenstoffatomen darstellt;
wobei die Zusammensetzung in Form einer Suspension aus festen bis-Harnstoff-Partikeln a) in einer kontinuierlichen Phase vorliegt, die von dem Ester b) gebildet wird.

2. Thixotrope Zusammensetzung nach Anspruch 1, **dadurch gekennzeichnet, dass** das Amin a1) ein n-Alkylamin mit 1 bis 22 Kohlenstoffatomen ist.

3. Thixotrope Zusammensetzung nach Anspruch 1 oder 2, **dadurch gekennzeichnet, dass** das Amin a1) n-Butylamin ist.

4. Thixotrope Zusammensetzung nach einem der Ansprüche 1 bis 3, **dadurch gekennzeichnet, dass** das Diisocyanat a2) folgende Formel (II) aufweist:
NCO-R⁶-NCO (II),
in der R⁶ aus einem der folgenden zweiwertigen Reste ausgewählt ist, in deren Formeln die 2 freien Valenzen erkennbar sind:
- a) der von Isophoron abgeleitete zweiwertige Rest: 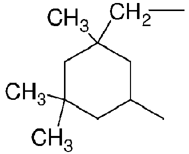
- b) der zweiwertige Rest 4,4'-Methylen-bis(cyclohexyl), 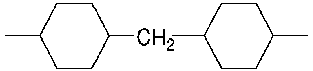
- c) der von 2,4-Toluoldiisocyanat (oder 2,4-TDI) oder von 2,6-Toluoldiisocyanat (oder 2,6-TDI) abgeleitete zweiwertige Rest mit der Formel: 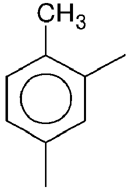 beziehungsweise 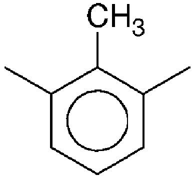
- d) der von 4,2'-Diphenylmethylendiisocyanat (oder 4,2'-MDI) oder von 4,4'-Diphenylmethylendiisocyanat (oder 4,4`-MDI) abgeleitete zweiwertige Rest mit der Formel: 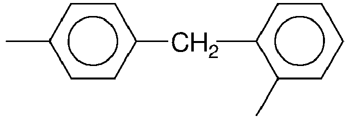 oder 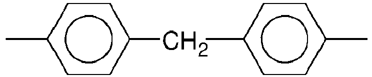
- e) -(CH₂)₆- (oder Hexamethylenrest) ;
- f) 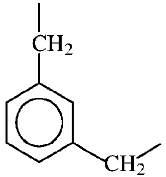 (oder m-Xylylenrest), g) 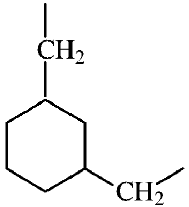 (oder Hexahydro-m-Xylylenrest).

5. Thixotrope Zusammensetzung nach einem der Ansprüche 1 bis 4, **dadurch gekennzeichnet, dass** das Diisocyanat a2) 4,4'-Diphenylmethylendiisocyanat ist.

6. Thixotrope Zusammensetzung nach einem der Ansprüche 1 bis 5, **dadurch gekennzeichnet, dass** der Ester b) die allgemeine Formel (I) aufweist, in der R⁴ einen Rest -CH₂-R⁵ darstellt.

7. Thixotrope Zusammensetzung nach einem der Ansprüche 1 bis 6, **dadurch gekennzeichnet, dass** der Ester b) die allgemeine Formel (I) aufweist, in der:
- R¹, R² und R³ identisch sind und jeweils einen Oxycarbonylalkylrest mit 4 oder 5 Kohlenstoffatomen darstellen; und
- R⁴ einen Rest -CH₂-R⁵ darstellt, in dem R⁵ mit R¹, R² und R³ identisch ist.

8. Thixotrope Zusammensetzung nach einem der Ansprüche 1 bis 7, **dadurch gekennzeichnet, dass** der Ester b) Pentaerythritoltetravalerat ist, der Formel (I) entspricht, in der R¹, R², R³ und R⁴ jeweils den Rest -O-C(O)-nC₄H₉ darstellen.

9. Haftende Kittzusammensetzung, die mindestens ein unter Feuchtigkeit vernetzbares Präpolymer, das aus einem Polyurethan mit den Endgruppen -NCO oder einem Präpolymer mit Alkoxysilyl-Endgruppen ausgewählt ist, und als Standfestigkeitsmittel bezogen auf das Gesamtgewicht der Zusammensetzung von 5 bis 30 Gewichts-% der thixotropen Zusammensetzung nach einem der Ansprüche 1 bis 8 umfasst.

10. Haftende Kittzusammensetzung nach Anspruch 9, **dadurch gekennzeichnet, dass** sie Folgendes umfasst:
- von 10 bis 30 Gewichts-% von mindestens einem Präpolymer, das unter Feuchtigkeit vernetzbar ist,
- von 20 bis 70 Gewichts-% von mindestens einem Füllstoff, der ausgewählt ist aus:
- mineralischen Füllstoffen, die aus Ton, Quarz, carbonathaltigen Füllstoffen ausgewählt sind, und
- Mischungen aus organischen Füllstoffen und den mineralischen Füllstoffen;
- von 5 bis 25 Gewichts-% der thixotropen Zusammensetzung, und
- von 0,01 bis 1 Gewichts-% von mindestens einem Vernetzungskatalysator,
wobei die Massenanteile bezogen auf das Gesamtgewicht der haftenden Zusammensetzung ausgedrückt sind.

11. Haftende Kittzusammensetzung nach Anspruch 9 oder 10, **dadurch gekennzeichnet, dass** das unter Feuchtigkeit vernetzbare Präpolymer ein Polyurethan mit den Endgruppen -NCO ist.

12. Haftende Kittzusammensetzung nach einem der Ansprüche 9 bis 11, **dadurch gekennzeichnet, dass** sie auf Basis des Gewichts der Zusammensetzung 5 bis 35 Gewichts-% von einem Weichmacher umfasst, der aus dem Ester b) mit der Formel (I) nach einem der Ansprüche 1 und 6 bis 8 besteht.

13. Gebrauchsfertiger Artikel, der die haftende Kittzusammensetzung nach einem der Ansprüche 9 bis 12 in einer luftdicht verschlossenen Verpackung umfasst.

## Claims

1. Thixotropic composition comprising, on the basis of the total weight of said composition:
- from 10% to 40% by weight of a bisurea a) obtained by reaction of a primary aliphatic amine a1) with a diisocyanate a2) having a molar mass of less than 500 g/mol, and
- from 60% to 90% by weight of an ester b) of formula (I) : 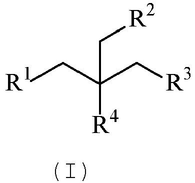 in which:
- R¹, R² and R³, which are identical or different, each represent an oxycarbonylalkyl radical having from 4 to 20 carbon atoms;
- R⁴ represents a hydrogen atom, a methyl or ethyl radical or else a radical: -CH₂-R⁵ in which R⁵ represents an oxycarbonylalkyl radical having from 4 to 20 carbon atoms;
said composition being in the form of a suspension of solid particles of bisurea a) in a continuous phase formed by the ester b).

2. Thixotropic composition according to Claim 1, **characterized in that** the amine a1) is an n-alkylamine comprising from 1 to 22 carbon atoms.

3. Thixotropic composition according to either of Claims 1 and 2, **characterized in that** the amine a1) is n-butylamine.

4. Thixotropic composition according to one of Claims 1 to 3, **characterized in that** the diisocyanate a2) has the formula (II):
NCO-R⁶-NCO (II)
in which R⁶ is chosen from one of the following divalent radicals, the formulae of which show the 2 free valencies:
- a) the divalent radical derived from isophorone: 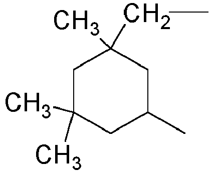
- b) the divalent radical 4,4'-methylene-bis(cyclohexyl) 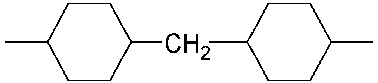
- c) the divalent radical derived from toluene 2,4-diisocyanate (or 2,4-TDI) or from toluene 2,6-diisocyanate (or 2,6-TDI) of respective formulae: 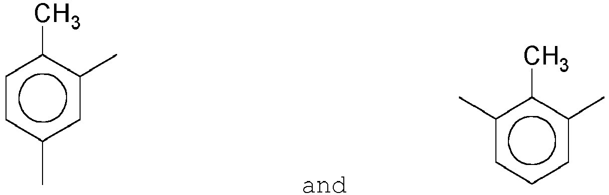
- d) the divalent radical derived from 4,2'-diphenylmethylene diisocyanate (or 4,2'-MDI) or from 4,4'-diphenylmethylene diisocyanate (or 4,4'-MDI), of formulae: 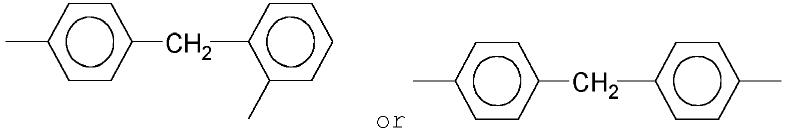
- e) -(CH₂)₆- (or hexamethylene radical);
- f) 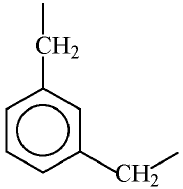 (or m-xylylene radical)
- g) 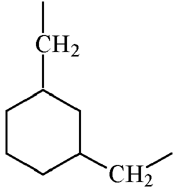 (or hexahydro-m-xylylene radical).

5. Thixotropic composition according to one of Claims 1 to 4, **characterized in that** the diisocyanate a2) is 4,4'-diphenylmethylene diisocyanate.

6. Thixotropic composition according to one of Claims 1 to 5, **characterized in that** the ester b) has the general formula (I), in which R⁴ represents a radical: -CH₂-R⁵.

7. Thixotropic composition according to one of Claims 1 to 6, **characterized in that** the ester b) has the general formula (I), in which:
- R¹, R² and R³ are identical and each represent an oxycarbonylalkyl radical having 4 or 5 carbon atoms; and
- R⁴ represents a radical: -CH₂-R⁵ in which R⁵ is identical to R¹, R² and R³.

8. Thixotropic composition according to one of Claims 1 to 7, **characterized in that** the ester b) is pentaerythritol tetravalerate, which corresponds to the formula (I) in which R¹, R², R³ and R⁴ each represent the radical: -O-C(O)-nC₄H₉.

9. Adhesive sealant composition comprising at least one moisture-crosslinkable prepolymer chosen from a polyurethane comprising -NCO end groups or a prepolymer comprising alkoxysilyl end groups, and, as anti-sagging agent, from 5% to 30% by weight, on the basis of the total weight of said composition, of the thixotropic composition as defined in one of Claims 1 to 8.

10. Adhesive sealant composition according to Claim 9, **characterized in that** it comprises:
- from 10% to 30% by weight of at least one moisture-crosslinkable prepolymer,
- from 20% to 70% by weight of at least one filler, chosen from:
- inorganic fillers, themselves chosen from clay, quartz or carbonate fillers, and
- mixtures of organic fillers and of said inorganic fillers;
- from 5% to 25% by weight of the thixotropic composition, and
- from 0.01% to 1% by weight of at least one crosslinking catalyst,
the percentages by weight being expressed with respect to the total weight of said adhesive composition.

11. Adhesive sealant composition according to either of Claims 9 and 10, **characterized in that** the moisture-crosslinkable prepolymer is a polyurethane comprising -NCO end groups.

12. Adhesive sealant composition according to one of Claims 9 to 11, **characterized in that** it comprises from 5% to 35% by weight, on the basis of the weight of said composition, of a plasticizer formed by the ester b) of formula (I) as defined in one of Claims 1 and 6 to 8.

13. Ready-to-use article, comprising the adhesive sealant composition as defined in one of Claims 9 to 12, in a hermetic packaging protected from air.
